# EUROPÄISCHE PATENTSCHRIFT

(11) **EP 0 466 742 B1**
(45) Veröffentlichungstag und Bekanntmachung des Hinweises auf die Patenterteilung: **21.07.1993**
(21) Anmeldenummer: 90905454.6
(22) Anmeldetag: 31.03.1990
(51) Int. Cl.: F16H 61/12, F16H 3/54, F16H 47/04

(54) **ANTRIEBSEINRICHTUNG MIT EINEM SCHALTGETRIEBE**
DRIVE DEVICE WITH GEARBOX
DISPOSITIF D'ENTRAINEMENT A TRANSMISSION

(30) Priorität: 07.04.1989 DE 3911333
(43) Veröffentlichungstag der Anmeldung: 22.01.1992
(73) Patentinhaber: ZF FRIEDRICHSHAFEN Aktiengesellschaft, 88038 Friedrichshafen (DE)
(72) Erfinder: MANN, Egon, D-7990 Friedrichshafen (DE); EYMÜLLER, Helmut, D-7990 Friedrichshafen (DE)
(86) Internationale Anmeldenummer: EP9000512
(87) Internationale Veröffentlichungsnummer: WO9012227

(56) Entgegenhaltungen:
- WO-A-84/01419
- WO-A-89/08796
- GB-A- 2 110 320
- GB-A- 2 164 397
- US-A- 4 026 167

## Beschreibung

Die Erfindung betrifft eine Antriebseinrichtung mit einem von einem'Antriebsmotor angetriebenen, lastschaltbaren Schaltgetriebe, insbesondere für Mobilbagger, Radlader und ähnliche Arbeitsmaschinen, nach dem Oberbegriff des Anspruches 1. Dabei sind die einzelnen Gangstufen des Schaltgetrieb es durch ein Gangschaltventil über je eine Reibungskupplung wechselweise zu- und abschaltbar. Wenigstens zwei der Reibungskupplungen sind als Federspeicherkupplungen ausgebildet und durch Öldruck aufsteuerbar, der von einer Ölpumpe erzeugt wird. Wenigstens eine der Reibungskupplungen ist als Bremse ausgeführt und besitzt eine statische, leckölfreie Ölzuführung. Wenigstens eine der Reibungskupplungen besitzt eine Ölzuführung über eine Drehzuführung durch eine sich drehende Welle.

Eine derartige Antriebseinrichtung ist Gegenstand der WO-A- 89/08796 mit der älteren deutschen Priorität P 38 08 067.2, Ein Absinken des von der Ölpumpe erzeugten Öldruckes unter einen bestimmten Wert kann bei unterschiedlichen Fahrzuständen zu Fehlern des Antriebes des Fahrzeuges führen. Beispielsweise könnte die in dem dargestellten 2-Gang-Getriebe auftretende Leckage bei unzureichend nachströmendem Drucköl ein weiteres Fortbewegen des Fahrzeuges unmöglich machen, z. B. durch eine unvorhergesehene plötzliche Abbremsung bis zum Stillstand.

Der Erfindung liegt deshalb die Aufgabe zugrunde, die Antriebseinrichtung derart zu verbessern, daß auch bei einem Absinken des Öldruckes das Fahrzeug noch aus eigener Kraft sicher aus dem Verkehr entfernt und beispielsweise an den Straßenrand gefahren werden kann. Zusätzlich soll bei einem Teilausfall eines elektrischen Steuerstromes ein sicheres Weiterfahren möglich bleiben.

Diese Aufgabe wird durch die im Anspruch 1 gekennzeichnete Antriebseinrichtung dadurch gelöst, daß bei einem Absinken des von der Ölpumpe erzeugten Öldruckes unter einen ersten bestimmten Wert das Gangschaltventil in eine Stellung verstellt wird, in der nur die Bremse mit Drucköl beaufschlagbar ist. Damit wird diejenige der beiden Reibungskupplungen durch den Öldruck geöffnet, die eine gehäusefeste Ölzuführung aufweist. Eine Bremse wird bei Verwendung eines 2-Gang-Getriebes vorgesehen. Bei Schaltgetrieben mit mehr als zwei Gängen können mehr als nur eine der Reibungskupplungen als Bremsen ausgebildet sein, die dann alle mit Drucköl versorgt werden können. Im Gegensatz zu einer Reibungskupplung mit einer Ölzuführung über eine sich drehende Welle tritt hierbei keine oder nur eine minimale Leckage auf. Die restliche, beispielsweise von einer Ölpumpe mit rutschendem Antriebskeilriemen noch geförderte, oder in einem Hydrospeicher befindliche Ölmenge wird deshalb über einen bestimmten Zeitraum die Bremse offenhalten können, so daß das Fahrzeug an einen sicheren Platz gefahren werden kann.

Zweckmäßig ist es bei Verwendung eines 2-Gang-Getriebes, wenn bei Beaufschlagung der Bremse mit Drucköl der 2. Gang geschaltet wird. Dadurch wird eine plötzliche Verzögerung vermieden, die bei einer Rückschaltung vom 2. Gang in den 1. Gang auftreten würde. Das Einschalten des 2. Ganges bzw. des durch die Beaufschlagung der Bremse(n) mit Drucköl geschalteten Ganges bei einem Absinken des Öldruckes wird in vorteilhafter Weise dadurch erreicht, daß an die Druckleitung, die von der Ölpumpe zu dem Gangschaltventil führt, ein Druckschalter angeschlossen ist, durch den bei einem Absinken des Öldruckes das Gangschaltventil in die entsprechende Schaltstellung verstellt wird.

Durch einen Hydrospeicher, der an die von der Ölpumpe zu den Reibungskupplungen führende Druckleitung angeschlossen ist, kann der erforderliche Öldruck bei einem vollständigen Ausfall der Ölpumpe über einen bestimmten Zeitraum aufrechterhalten werden.

Eine plötzliche Verzögerung kann bei einem Ausfall eines elektrischen Steuerstromes dadurch vermieden werden, daß das Gangschaltventil auch in einem solchen Fall in die genannte Schaltstellung verstellt wird.

Fällt der Öldruck in der Druckleitung weiter bis unter einen Druck, der zu einem Offenhalten der Bremse nicht mehr ausreicht, so ist es vorteilhaft, durch einen zweiten Druckschalter den Antriebsmotor abzubremsen. Wird als Antriebsmotor ein Hydromotor verwendet, der von einer Hydropumpe über ein Fahrventil mit Drucköl versorgt wird, so wird durch den zweiten Druckschalter das Fahrventil in seine neutrale, eine Verbindung von der Hydropumpe zu dem Hydromotor absperrende Schaltstellung verstellt.

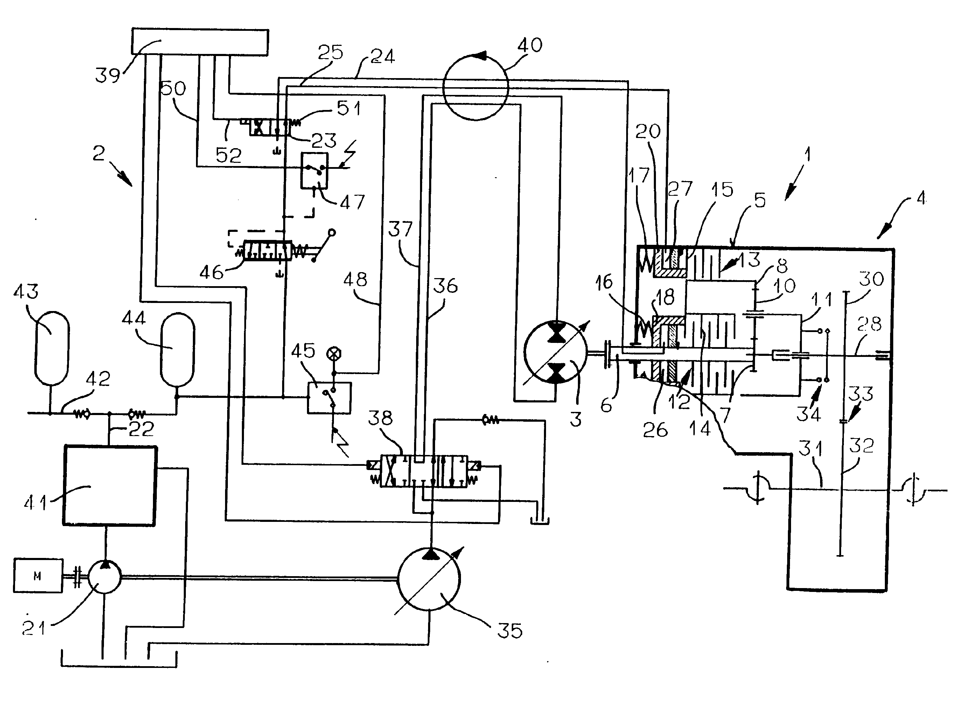

Im folgenden wird die Erfindung anhand eines in der Zeichnung dargestellten Ausführungsbeispieles näher erläutert. Die einzige Zeichnung zeigt die erfindungsgemäße Antriebseinrichtung in einer schematischen Darstellung.

Die Antriebseinrichtung besteht im wesentlichen aus einem Antriebsteil 1 und einem Steuerteil 2. In dem Antriebsteil 1 ist ein Hydromotor 3 enthalten, der ein 2-Gang-Getriebe 4 antreibt. Anstelle des Hydromotors 3 kann jeder Antriebsmotor verwendet werden, der mit stufenloser Drehzahl- und Drehmomentwandlung aus der Anfangsdrehzahl Null heraus ausgeführt ist. Dies kann beispielsweise ein Elektromotor sein. Ebenso kann ein Schaltgetriebe mit mehr als zwei schaltbaren Gängen verwendet werden.

Das 2-Gang-Getriebe 4 ist als lastschaltbares Planetengetriebe ausgebildet. In einem Gehäuse 5 ist mit einer Eingangswelle 6 ein Sonnenrad 7 drehfest verbunden. Zu dem 2-Gang-Getriebe 4 gehört außerdem ein Hohlrad 8 und eine Anzahl von Planetenrädern 10, die an einem Planetenträger 11 gehalten sind. Die beiden Gangstufen des 2-Gang-Getriebes 4 sind über zwei Reibungskupplungen 12 und 13 schaltbar. Die beiden Reibungskupplungen 12 und 13 sind zweckmäßigerweise radial ineinander angeordnet mit im wesentlichen gleicher axialer Erstreckung. Beide Reibungskupplungen 12 und 13 sind als Federspeicherkupplungen ausgebildet, deren Lamellen 14 bzw. 15 durch eine Druckfeder 16 bzw. 17 über einen Kolben 18 bzw. 20 aneinandergedrückt werden. Die beiden Reibungskupplungen 12 und 13 werden also durch Federkraft geschlossen.

Geöffnet werden die beiden Reibungskupplungen 12 und 13 durch einen Öldruck, der von einer Ölpumpe 21 erzeugt wird. Die Ölpumpe 21 fördert das Drucköl über eine Druckleitung 22, ein Gangschaltventil 23 und zwei Steuerleitungen 24 und 25 zu einem Zylinderraum 26 der Reibungskupplung 12 bzw. einem Zylinderraum 27 der Reibungskupplung 13. Dabei erfolgt die Zuleitung des Drucköles aus der Steuerleitung 24 in den Zylinderraum 26 über eine Drehzuführung durch die Eingangswelle 6. Die Zuführung des Drucköles aus der Steuerleitung 25 in den Zylinderraum 27 erfolgt über eine statische, d. h. starre, und damit leckölfreie Zuführung direkt aus dem Gehäuse 5 in den Zylinderraum 27.

Der Planetenträger 11 ist auf einer Zahnradwelle 28 gelagert, die ihrerseits in dem Gehäuse 5 gelagert ist. Die Zahnradwelle 28 trägt ein Stirnrad 30, das mit einem weiteren, auf einer Ausgangswelle 31 befestigten Stirnrad 32 kämmt. Über die Ausgangswelle 31 werden die nicht dargestellten Räder des Fahrzeuges angetrieben.

Die beiden Stirnräder 30 und 31 bilden zusammen eine Stirnradstufe 33. Zwischen dem 2-Gang-Getriebe 4 und der Stirnradstufe 33 ist eine Trennkupplung 34 eingebaut, durch die die Verbindung zwischen dem 2-Gang-Getriebe 4 und der Stirnradstufe 33 ein- und ausschaltbar ist.

Der Hydromotor 3 wird von einer Hydropumpe 35 mit Öl versorgt. Bei dem in der Zeichnung dargestellten Ausführungsbeispiel der Antriebseinrichtung für einen Mobilbagger befindet sich die Hydropumpe 35 zusammen mit dem Steuerteil 2 im Oberwagen, während der Antriebsteil 1 mit dem Hydromotor 3 und dem 2-Gang-Getriebe 4 im Unterwagen angeordnet ist. Für diesen Anwendungsfall wird der Hydromotor 3 von der Hydropumpe 35 im offenen Kreislauf über zwei Arbeitsleitungen 36 und 37 mit Öl versorgt. Das von der Hydropumpe 35 geförderte Öl wird über ein Fahrventil 38 zu den Arbeitsleitungen 36 bzw. 37 gesteuert. Das Fahrventil 38 kann direkt oder indirekt elektromagnetisch über eine elektronische Steuereinheit 39 betätigt werden. Die Ansteuerung kann auch hydraulisch erfolgen. Der Oberwagen und der Unterwagen des Mobilbaggers sind über ein Drehgelenk 40 miteinander verbunden, durch das die beiden Steuerleitungen 24 und 25 und die beiden Arbeitsleitungen 36 und 37 hindurchgeführt werden.

Wird die Antriebseinrichtung für andere Baumaschinen, beispielsweise einen Radlader, verwendet, so ist es zweckmäßig, die Hydropumpe 35 und den Hydromotor 3 durch einen geschlossenen Kreislauf miteinander zu verbinden, da die Hydropumpe in diesem Fall nur den Fahr-Hydromotor versorgen muß.

Zwischen der Ölpumpe 21 und dem Gangschaltventil 23 sind in die Druckleitung 22 nacheinander folgende Bauelemente eingebaut bzw. an sie angeschlossen: Ein Speicherladeventil 41, eine Arbeitsleitung 42 mit einem Hydrospeicher 43 für eine nicht dargestellte Betriebsbremse, ein Hydrospeicher 44 für die beiden Reibungskupplungen 12 und 13, ein erster Druckschalter 45, ein Handbremsventil 46 und ein zweiter Druckschalter 47. Die beiden Druckschalter 45 und 47 sind über elektrische Steuerleitungen 48 bzw. 50 mit der elektronischen Steuereinheit 39 verbunden. Mit dem Handbremsventil 46 kann die Zufuhr von Drucköl zu den Reibungskupplungen 12, 13 dosiert verringert werden.

Das Gangschaltventil 23 ist durch die Kraft einer Druckfeder 51 in seine 2.-Gang-Stellung beaufschlagbar, während seine 1.-Gang-Stellung elektromagnetisch über die elektronische Steuereinheit 39 und eine elektrische Steuerleitung 52 einstellbar ist.

Das Gangschaltventil 23 kann mit gleicher Wirkung auch in zwei einzeln ansteuerbare Schaltventile aufgeteilt werden, von denen je eines einer der Reibungskupplungen 12 und 13 zugeordnet ist.

Im folgenden wird die Funktion der Antriebseinrichtung beschrieben: Im Stillstand des Fahrzeuges sind die beiden Reibungskupplungen 12 und 13 durch die Kraft der Druckfedern 16 und 17 geschlossen. Dadurch sind die Räder des 2-Gang-Getriebes 4 blockiert. Die Einrichtung wirkt als Haltebremse.

Zum Einschalten des 1. Ganges wird das Gangschaltventil 23 in seine 1.-Gang-Stellung verstellt. Dadurch wird Drucköl von der Ölpumpe 21 durch die Druckleitung 22 und die Steuerleitung 24 in den Zylinderraum 26 geleitet. Der Kolben 18 wird gegen die Kraft der Druckfeder 16 nach links verschoben, so daß die Reibungskupplung 12 geöffnet wird. Über die durch die Kraft der Druckfeder 17 geschlossene Reibungskupplung 13 ist der 1. Gang geschaltet.

Zum Einschalten des 2. Ganges wird das Gangschaltventil 23 durch die Kraft der Druckfeder 51 in seine 2.-Gang-Stellung verstellt. Dadurch wird der Zylinderraum 26 der Reibungskupplung 12 entlüftet, so daß die Reibungskupplung 12 schließt. Gleichzeitig wird die außenliegende Reibungskupplung 13 dadurch geöffnet, daß dem Zylinderraum 27 über die Steuerleitung 25 Drucköl zugeführt wird. Der weitere Verlauf der Kraftübertragung durch das Planetengetriebe und die Stirnradstufe 33 auf die Ausgangswelle 31 ist leicht verständlich aus der Zeichnung zu entnehmen.

Bei einem Absinken des von der Ölpumpe 21 erzeugten Öldruckes unter einen ersten bestimmten Wert wird in dem ersten Druckschalter 45 ein Signal erzeugt, das über die elektrische Steuerleitung 48 der elektronischen Steuereinheit 39 zugeführt wird. Daraufhin wird das Gangschaltventil 23 durch die Kraft der Druckfeder 51 in seine 2,-Gang-Stellung verstellt bzw. in ihr gehalten. Da ein Absinken des von der Ölpumpe 21 erzeugten Öldruckes häufig mit der Tatsache zusammenhängt, daß nicht mehr genügend Drucköl gefördert wird, wird diese verbleibende Restölmenge dem Zylinderraum 27 der äußeren Reibungskupplung 13 zugeführt. Da die Ölzuführung durch das Gehäuse 5 direkt und damit leckölfrei in den Zylinderraum 27 erfolgt und da zum Öffnen der Reibungskupplung 13 nur ein sehr kleiner Hub des Kolbens 20 erforderlich ist, wird durch diese Einrichtung für eine bestimmte Zeit die Ölversorgung des 2-Gang-Getriebes 4 sichergestellt. Durch die Anordnung des Hydrospeichers 44 kann diese Sicherheitszeitspanne genau festgelegt werden.

Bei einem Ausfall des für das Gangschaltventil 23 benötigten elektrischen Steuerstromes wird das Gangschaltventil 23 durch die Kraft der Druckfeder 51 in die 2.-Gang-Stellung verstellt.

Werden anstelle des Gangschaltventils 23 einzelne Schaltventile verwendet, so werden diese bei Ausfall des elektrischen Steuerstromes über die Kraft von Federn in ihre Neutralstellung verstellt, in der - je nach gewählter Schaltungsanordnung - alle Reibungskupplungen offen sind oder nur eine Reibungskupplung geschlossen ist. Wenn alle Reibungskupplungen offen sind, dann kann das Fahrzeug weiterrollen. Mit nur einer geschlossenen Reibungskupplung kann das Fahrzeug im entsprechenden Gang weiterfahren.

Sinkt der Öldruck in der Druckleitung 22 stromabwärts hinter dem Handbremsventil 46 unter einen zweiten bestimmten Wert, der unterhalb des ersten bestimmten Wertes liegt, so wird das Fahrventil 38 in seine neutrale, eine Verbindung von der Hydropumpe 35 zu dem Hydromotor 3 absperrende Schaltstellung verstellt. Dies ist z. B. auch dann der Fall, wenn das Handbremsventil 46 betätigt wird. Damit wird sichergestellt, daß keine Abbremsung gegen den Antrieb der Hydrostatik erfolgt.

### Bezugszeichen

- 1: Antriebsteil
- 2: Steuerteil
- 3: Hydromotor
- 4: 2-Gang-Getriebe
- 5: Gehäuse
- 6: Einganaswelle
- 7: Sonnenrad
- 8: Hohlrad
- 9: -
- 10: Planetenrad
- 11: Planetenträger
- 12: Reibungskupplung
- 13: Reibungskupplung
- 14: Lamellen
- 15: Lamellen
- 16: Druckfeder
- 17: Druckfeder
- 18: Kolben
- 19: -
- 20: Kolben
- 21: Ölpumpe
- 22: Druckleitung
- 23: Gangschaltventil
- 24: Steuerleitung
- 25: Steuerleitung
- 26: Zylinderraum
- 27: Zylinderraum
- 28: Zahnradwelle
- 29: -
- 30: Stirnrad
- 31: Ausgangswelle
- 32: Stirnrad
- 33: Stirnradstufe
- 34: Trennkupplung
- 35: Hydropumpe
- 36: Arbeitsleitung
- 37: Arbeitsleitung
- 38: Fahrventil
- 39: Elektronische Steuereinheit
- 40: Drehgelenk
- 41: Speicherladeventil
- 42: Arbeitsleitung
- 43: Hydrospeicher
- 44: Hydrospeicher
- 45: Erster Druckschalter
- 46: Handbremsventil
- 47: Zweiter Druckschalter
- 48: Elektrische Steuerleitung
- 49: -
- 50: Elektrische Steuerleitung
- 51: Druckfeder
- 52: Elektrische Steuerleitung

## Patentansprüche

1. Antriebseinrichtung, insbesondere für Mobilbagger, Radlader und ähnliche Arbeitsmaschinen, mit folgenden Merkmalen:
- ein Antriebsmotor treibt ein Schaltgetriebe (4) mit wenigstens zwei schaltbaren Gängen, das als lastschaltbares Planetengetriebe ausgebildet ist;
- die Gangstufen des Schaltgetriebes (4) sind durch ein Gangschaltventil (23) über je eine Reibungskupplung (12, 13) wechselweise zu- und abschaltbar;
- wenigstens zwei der Reibungskupplungen (12, 13) sind als Federspeicherkupplungen ausgebildet und durch Öldruck aufsteuerbar, der von wenigstens einer Ölpumpe (21) erzeugt wird;
- wenigstens eine der Reibungskupplungen (13) ist als Bremse ausgeführt und besitzt eine statische, leckölfreie Ölzuführung;
- wenigstens eine der Reibungskupplungen (12) besitzt eine Ölzuführung über eine Drehzuführung durch eine sich drehende Welle,
dadurch **gekennzeichnet,** daß bei einem Absinken des von der Ölpumpe (21) erzeugten Öldruckes unter einen ersten bestimmten Wert das Gangschaltventil (23) in eine Stellung verstellt wird, in der nur die Bremse(n) (Reibungskupplung 13) mit Drucköl beaufschlagbar ist (sind).

2. Antriebseinrichtung nach Anspruch 1, wobei das Schaltgetriebe (4) als 2-Gang-Getriebe ausgebildet ist,
dadurch **gekennzeichnet,** daß bei Beaufschlagung der Bremse (Reibungskupplung 13) der 2. Gang des Schaltgetriebes (4) geschaltet ist.

3. Antriebseinrichtung nach Anspruch 1,
dadurch **gekennzeichnet,** daß an die von der Ölpumpe (21) zu dem Gangschaltventil (23) führende Druckleitung (22) ein erster Druckschalter (45) angeschlossen ist, durch den bei Absinken des Öldruckes unter den ersten bestimmten Wert das Gangschaltventil (23) in die Schaltstellung verstellt wird, in der die Bremse(n) (Reibungskupplung 13) mit Drucköl beaufschlagt ist (sind).

4. Antriebseinrichtung nach Anspruch 2,
dadurch **gekennzeichnet,** daß an die Druckleitung (22) ein Hydrospeicher (44) angeschlossen ist.

5. Antriebseinrichtung nach Anspruch 1,
dadurch **gekennzeichnet,** daß das Gangschaltventil (23) bei Ausfall eines elektrischen Steuerstromes durch die Kraft einer Druckfeder (51) in die Schaltstellung verstellt wird, in der die Bremse(n) (Reibungskupplung 13) mit Drucköl beaufschlagt ist (sind).

6. Antriebseinrichtung nach Anspruch 1,
dadurch **gekennzeichnet,**
- daß in der von der Ölpumpe (21) zu dem Gangschaltventil (23) führenden Druckleitung (22) ein Handbremsventil (46) angeordnet ist, mit dem die Zufuhr von Drucköl zu den Reibungskupplungen (12, 13) dosiert verringert werden kann und
- daß an die Druckleitung (22) zwischen dem Handbremsventil (46) und dem Gangschaltventil (23) ein zweiter Druckschalter (47) angeschlossen ist, durch den bei Absinken des Öldruckes unter einen zweiten bestimmten Wert, der unterhalb des ersten bestimmten Wertes liegt, der Antriebsmotor (Hydromotor 3) vom Antrieb abgeschaltet wird.

7. Antriebseinrichtung nach Anspruch 6, wobei der Antriebsmotor ein Hydromotor (3) ist, der von einer Hydropumpe (35) über ein Fahrventil (38) mit Drucköl versorgt wird, dadurch **gekennzeichnet,** daß bei einem Absinken des Öldruckes unter den zweiten bestimmten Wert das Fahrventil (38) in seine neutrale, eine Verbindung von der Hydropumpe (35) zu dem Hydromotor (3) absperrende Schaltstellung verstellt wird.

8. Antriebseinrichtung nach Anspruch 6, wobei der Antriebsmotor ein Hydromotor (3) ist, der von einer Hydropumpe (35) in geschlossenem Kreislauf mit Drucköl versorgt wird, dadurch **gekennzeichnet,** daß bei einem Absinken des Öldruckes unter den zweiten bestimmten Wert die Hydropumpe (35) in ihre Neutralstellung verstellt wird, so daß der Hydromotor beim Abbremsen des Fahrzeuges mitwirkt.

9. Antriebseinrichtung nach Anspruch 6, wobei der Antriebsmotor ein Hydromotor (3) ist, der von einer Hydropumpe (35) über ein Fahrventil (38) mit Drucköl versorgt wird, wobei das Gangschaltventil (23) in einzelne Schaltventile aufgeteilt ist, die je eine der Reibungskupplungen (12, 13) steuern, dadurch **gekennzeichnet**, daß bei Ausfall des elektrischen Steuerstromes die Schaltventile über die Kraft von Federn in ihre Neutralstellung verstellt werden, in der alle Reibungskupplungen offen sind oder nur eine Reibungskupplung geschlossen ist.

## Claims

1. Drive device, in particular for mobile excavators, wheel loaders and similar driven machines, having the following features:
- a drive motor drives a gear shift mechanism (4) with at least two engageable gears, which takes the form of a power shift planetary gearing;
- the gear steps of the gear shift mechanism (4) may alternately be engaged and disengaged by a gear shift valve (23) in each case via a friction clutch (12, 13);
- at least two of the friction clutches (12, 13) take the form of spring clutches and are openable by oil pressure which is generated by at least one oil pump (21);
- at least one of the friction clutches (13) takes the form of a brake and has a static, leakage-free oil supply;
- at least one of the friction clutches (12) has an oil supply via a rotating supply through a rotating shaft,
characterized in that, if the oil pressure generated by the oil pump (21) drops below a first specific value, the gear shift valve (23) is moved into a position in which only the brake(s) (friction clutch 13) may be acted upon by pressure oil.

2. Drive device according to claim 1, wherein the gear shift mechanism (4) takes the form of a two-speed gear unit, characterized in that, when the brake (friction clutch 13) is acted upon, the second gear of the gear shift mechanism (4) is engaged.

3. Drive device according to claim 1, characterized in that connected to the pressure line (22) which leads from the oil pump (21) to the gear shift valve (23) is a first pressure-operated switch (45) by means of which, if the oil pressure drops below the first specific value, the gear shift valve (23) is moved into the position in which the brake(s) (friction coupling 13) may be acted upon by pressure oil.

4. Drive device according to claim 2, characterized in that a hydraulic accumulator (44) is connected to the pressure line (22).

5. Drive device according to claim 1, characterized in that, in the event of failure of an electrical control current, the gear shift valve (23) is moved by the action of a pressure spring (51) into the position in which the brake(s) (friction clutch 13) may be acted upon by pressure oil.

6. Drive device according to claim 1, characterized in that
- disposed in the pressure line (22) which leads from the oil pump (21) to the gear shift valve (23) is a hand brake valve (46) by means of which the supply of pressure oil to the friction clutches (12, 13) may be reduced in a metered manner and
- connected to the pressure line (22) between the hand brake valve (46) and the gear shift valve (23) is a second pressure-operated switch (47) by means of which the drive motor (hydraulic motor 3) is disconnected from the drive if the oil pressure drops below a second specific value which is below the first specific value.

7. Drive device according to claim 6, wherein the drive motor is a hydraulic motor (3) which is supplied by a hydraulic pump (35) with pressure oil via a service valve (38), characterized in that, if the oil pressure drops below the second specific value, the service valve (38) is moved into its neutral position in which it blocks a connection from the hydraulic pump (35) to the hydraulic motor (3).

8. Drive device according to claim 6, wherein the drive motor is a hydraulic motor (3) which is supplied by a hydraulic pump (35) with pressure oil in a closed circuit, characterized in that, if the oil pressure drops below the second specific value, the hydraulic pump (35) is moved into its neutral position so that the hydraulic motor cooperates in the braking of the vehicle.

9. Drive device according to claim 6, wherein the drive motor is a hydraulic motor (3) which is supplied by a hydraulic pump (35) with pressure oil via a service valve (38), wherein the gear shift valve (23) is subdivided into individual control valves which each control one of the friction clutches (12, 13), characterized in that, in the event of failure of the electrical control current, the control valves are moved by the action of springs into their neutral position in which all of the friction clutches are open or only one friction clutch is closed.

## Revendications

1. Dispositif d'entraînement, notamment pour des pelles automotrices, des chargeuses sur roues et des machines de travail analogues, dans lequel :
- un moteur d'entraînement entraîne une boîte de vitesses (4) à au moins deux rapports commutables, formée par une boîte planétaire commutable en charge;
- les rapports de la boîte de vitesses (4) sont enclenchés et déclenchés alternativement par une soupape de changement de rapports (23) au moyen d'un embrayage à friction (12, 13) pour chacun d'eux;
- au moins deux des embrayages à friction (12, 13) sont agencés en embrayages à ressorts accumulateurs et sont commandés par une pression d'huile produite par au moins une pompe à huile (21);
- au moins un des embrayages à friction (13) est agencé en frein et possède une amenée d'huile statique et sans fuites;
- au moins un des embrayages à friction (12) possède une amenée d'huile à travers un arbre rotatif au moyen d'un raccord tournant,
**caractérisé** en ce que, lorsque la pression produite par la pompe à huile (21) tombe au-dessous d'une première valeur déterminée, la soupape de changement de rapports (23) est mise dans une position où uniquement le ou les freins (embrayage 13) est ou sont alimentés en huile sous pression.

2. Dispositif selon la revendication 1, dans lequel la boîte de vitesses (4) est une boîte à deux rapports, **caractérisé** en ce que le second rapport de la boîte de vitesses (4) est enclenché en cas d'actionnement du frein (embrayage 13).

3. Dispositif selon la revendication 1, **caractérisé** en ce que le conduit de pression (22) allant de la pompe à huile (21) à la soupape de changement de rapports (23) est raccordé à un premier commutateur à pression (45) au moyen duquel, lorsque la pression d'huile tombe au-dessous de la première valeur déterminée, la soupape de changement de rapports (23) est mise dans la position où le ou les freins (embrayage 13) est ou sont alimentés en huile sous pression.

4. Dispositif selon la revendication 2, **caractérisé** en ce que le conduit de pression (22) est raccordé à un accumulateur hydraulique (44).

5. Dispositif selon la revendication 1, **caractérisé** en ce que la soupape de changement de rapports (23), en cas de panne d'un courant électrique de commande, est mise par la force d'un ressort de compression (51) dans la position où le ou les freins (embrayage 13) est ou sont alimentés en huile sous pression.

6. Dispositif selon la revendication 1, **caractérisé**
- en ce que le conduit de pression (22) allant de la pompe à huile (21) à la soupape de changement de rapports (23) comporte une soupape de freinage manuel (46) avec laquelle il est possible de réduire de manière dosée l'amenée d'huile sous pression aux embrayages à friction (12, 13), et
- en ce que le conduit de pression (22) reliant la soupape de freinage manuel (46) à la soupape de changement de rapports (23) comporte un second commutateur à pression (47) au moyen duquel, lorsque la pression d'huile tombe au-dessous d'une s**e**conde valeur déterminée, inférieure à la première valeur déterminée, le moteur d'entraînement (moteur hydraulique 3) est découplé de l'entraînement.

7. Dispositif selon la revendication 6, dans lequel le moteur d'entraînement est un moteur hydraulique (3) alimenté en huile par une pompe hydraulique (35) via un distributeur de marche (38), **caractérisé** en ce que, lorsque la pression d'huile tombe au-dessous de la seconde valeur déterminée, le distributeur de marche (38) est mis dans sa position neutre qui bloque une liaison allant de la pompe hydraulique (35) au moteur hydraulique (3).

8. Dispositif selon la revendication 6, dans lequel le moteur d'entraînement est un moteur hydraulique (3) alimenté en huile sous pression en circuit fermé par une pompe hydraulique (35), **caractérisé** en ce que, lorsque la pression d'huile tombe au-dessous de la seconde valeur déterminée, la pompe hydraulique (35) est mise dans sa position neutre, de sorte que le moteur hydraulique coopère au freinage du véhicule.

9. Dispositif selon la revendication 6, dans lequel le moteur d'entraînement est un moteur hydraulique (3) alimenté en huile sous pression par une pompe hydraulique (35) via un distributeur de marche (38) et dans lequel la soupape de changement de rapports (23) est divisée en différents distributeurs qui commandent chacun l'un des embrayages à friction (12, 13), **caractérisé** en ce qu'en cas de panne d'un courant électrique de commande, lesdits distributeurs sont mis, par la poussée de ressorts, dans leur position neutre où tous les embrayages à friction sont ouverts ou un seul embrayage à friction est fermé.
